# EUROPEAN PATENT SPECIFICATION

(11) **EP 4 000 366 B1**
(45) Date of publication and mention of the grant of the patent: **14.10.2026**
(21) Application number: 21207142.7
(22) Date of filing: 09.11.2021
(51) Int. Cl.: A01D 34/00, A01D 34/74, G06Q 10/06

(54) **ROBOTIC WORK TOOL AND METHOD FOR RUNNING A ROBOTIC WORK TOOL**
ROBOTERARBEITSWERKZEUG UND VERFAHREN ZUM BETRIEB EINES ROBOTERWERKZEUGS
OUTIL DE TRAVAIL ROBOTIQUE ET PROCÉDÉ DE FONCTIONNEMENT D'UN OUTIL DE TRAVAIL ROBOTIQUE

(30) Priority: 13.11.2020 SE 2051332
(43) Date of publication of application: 25.05.2022
(73) Proprietor: HUSQVARNA AB, 561 82 Huskvarna (SE)
(72) Inventor: FORSMAN, Pär, 55447 Jönköping (SE)

(56) References cited:
- EP-A1- 2 767 150
- CN-A- 110 933 986
- US-A1- 2017 280 622
- US-A1- 2018 352 730
- US-A1- 2020 170 186
- US-A1- 2020 214 196
- US-B2- 10 034 421

## Description

### Field of the invention

The present invention relates to a robotic work tool comprising a cutting disk, which is rotatable and height adjustable.

The invention also relates to a method for running a robotic work tool.

### Background

WO2016/150503A1 discloses one example of a robotic work tool, wherein a tool is adapted to be carried by a tool holder in a movable, in particular pivotable, manner. A pin on a cutting disk may be arranged in a round or oblong hole or slit in the tool.

Since the pin is disposed some distance from the center of the cutting disk, the tool is movably arranged on the pin with a certain amount of play in several directions, and the tool is arranged to extend partly outside of the outer edge of the cutting disk, the tool may droop at one end. In such an instance, the drooping end of the tool may hang down from the level of the cutting disk by several millimeters, sometimes even up to 10 mm, when the cutting disk is in a stationary position. The tool may hereby be positioned at an angle to the cutting disk, typically with its outer end hanging down from the level of the cutting disk.

Since the tools, i. e. the knives, tend to extend below the level of the cutting disk, there is a considerable risk that the work may be uneven, and that the lawn etc. may be cut, at least partly, to a lower height than intended and set by the user. Occasionally there is a risk that the tools reach the ground and damage the turf. The problems may be worse at the start and end of a cutting cycle. They may be particularly noticeable if the intended cutting height is very low.

Attempts have been made to solve the problem by fixing the tools rigidly to the cutting disk. Unfortunately, some of the functionalities of the tools, such as their ability to yield to obstacles that cannot be cut, may be lost thereby. Also, the rigid fixing of the tools may in some cases call for a different design of parts barring the access to the cutting disk, in order to comply with safety regulations.

Another example of prior art is CN110933986A, which discloses a robotic work tool comprising a cutting disk which is rotatable and height adjustable. The height adjustment is obtained with the same motor as the motor for rotation. Although the motor has a higher rotational speed during the cutting than during the adjustment, there is no consideration of the effects of a lowered speed on the knives on the rotating cutting disk.

### Summary

It is an object of the present invention to solve, or at least mitigate, parts or all of the above mentioned problems. To this end, there is provided a robotic work tool according to claim 1 and a method for running a robotic work tool according to claim 11. Prefferred embodiments are provided in the dependent claims.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
- Fig. 1: is a diagrammatic view from above of a robotic work tool according to the disclosure;
- Fig. 2a: is a diagrammatic view from the side of the robotic work tool according to the disclosure;
- Fig. 2b: is a sectional view from the side of the robotic work tool;
- Fig. 3: is a schematic side view of a cutting disk included in the robotic work tool;
- Figs. 4a-b: are partial views of the cutting disk and a knife disposed thereon; and
- Fig. 5: is a schematic view of the functional units included in the robotic work tool according to the disclosure.

All the figures are schematic, not necessarily to scale, and generally only show parts which are necessary in order to elucidate the embodiments, wherein other parts may be omitted.

### Detailed description of the exemplary embodiments

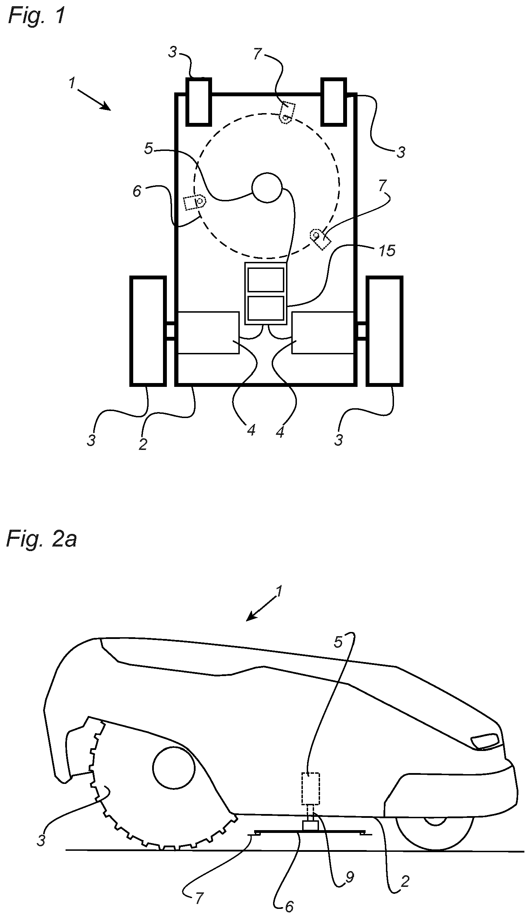

Fig. 1 illustrates schematically a robotic work tool 1 as seen from above. The robotic work tool 1 has a chassis 2 with wheels 3 mounted thereon. The robotic work tool 1 further comprises motors 4 for driving the wheels 3 as well as a motor 5 for driving a cutting disk 6. The cutting disk 6 may rotate in either direction, i. e. clockwise and anti-clockwise alternately. A mechanism (not shown) for regulating the height of the cutting disk 6 is provided, so that the distance between the cutting disk 6 and the ground may be regulated.

A number of tools 7 are arranged, preferably evenly spaced, near the periphery of the cutting disk 6. In the embodiments disclosed in the figures, the tools 7 are preferably cutting knives, but other similar types of tools 7 are included in the scope of this patent application.

As the robotic work tool 1 proceeds across a work area, such as a lawn, while the cutting disk 6 rotates, the cutting disk 6 may create a cut path with a width approximately corresponding to the diameter of the cutting disk 6. When the height of the lawn is close to a set height of the cutting disk 6, the cut path may not be clearly visible.

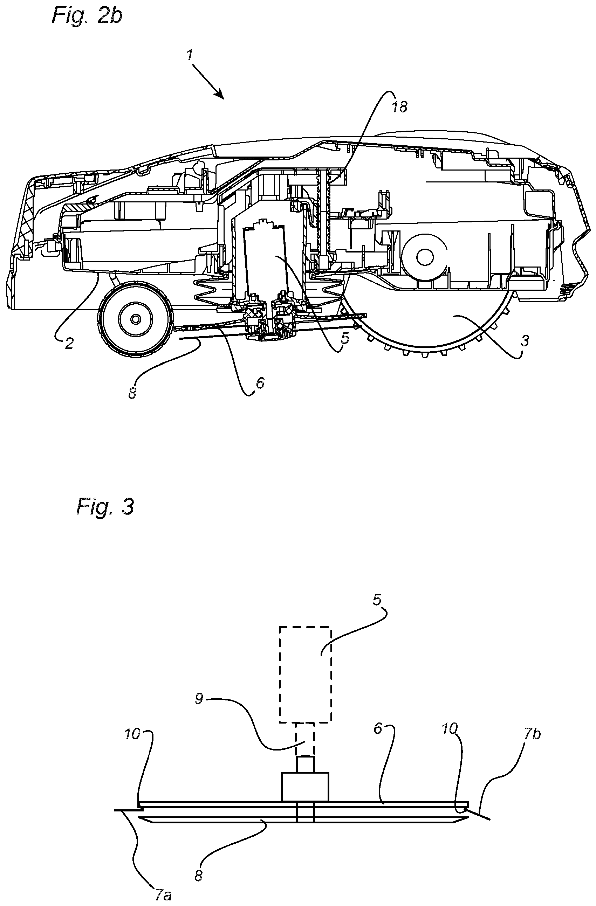

When the robotic work tool 1 is seen from the side, as in Fig. 2a, it is clear that the motor 5 driving the cutting disk 6 is positioned above the cutting disk 6, with a drive shaft 9 extending from the motor 5 to the cutting disk 6. The drive shaft 9 may be slightly tilted in relation to the vertical, as seen in Fig. 2b. The cutting disk 6 is arranged to be height adjustable, by an elevation mechanism 18, known as such in the art. The motor 5 may in most cases be arranged to move with the cutting disk 6, when the latter is raised or lowered by the elevation mechanism. Optionally a skid plate 8 (see Fig. 2b) may be arranged below the cutting disk 6.

Raising and lowering the cutting disk 6 may decide the cutting height of the robotic work tool 1. An operator of the robotic work tool 1 may set a desired final cutting height by any input means known in the art. Depending on the configuration of the robotic work tool 1 and the state of the work area, the robotic work tool 1 may determine a first cutting height equal to the desired final cutting height or a first cutting height which is higher than the desired final cutting height. In other words, the desired final cutting height may be reached in a single step or in several, smaller steps.

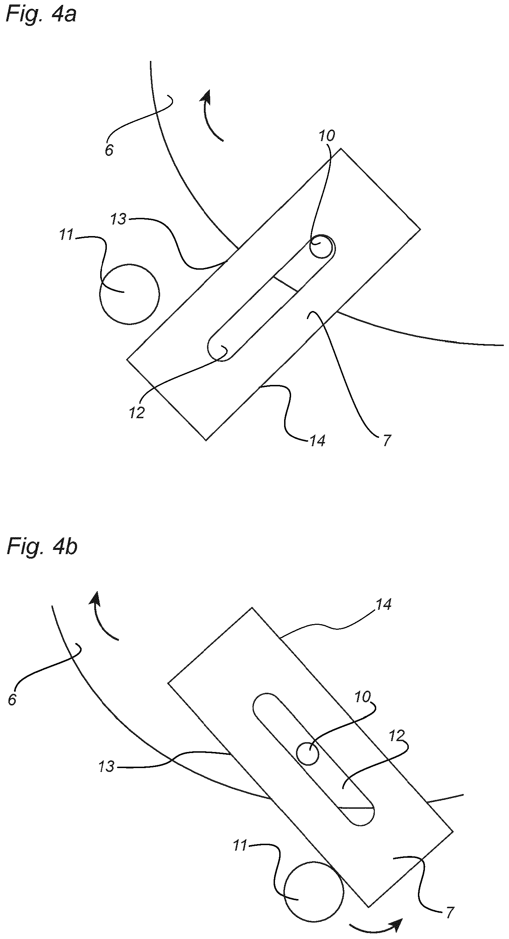

In Fig. 3 the cutting disk 6, the motor 5, the drive shaft 9, and the skid plate 8 are shown from the side. Two of the tools 7a, 7b, e. g. knives, are schematically shown at the peripheral edges of the cutting plate 6. The tools 7a, 7b are rotatably arranged on pins 10. The tools 7a, 7b are arranged with a certain clearance on their respective pins 10. In some embodiments, each tool 7a, 7b may even be provided with an elongated slit 12, through which the pin 10 extends (see Figs. 4a-b). The clearance may allow the tools 7a, 7b to be arranged with a skew on the pin 10, and the outer end of the tool 7b may droop, as suggested in Fig. 3. The skew may be larger if the clearance is larger. The tools 7a, 7b in Fig. 3 are shown in two of the different positions that they may attain, depending on the speed of rotation of the cutting disk 6. It should be noted that the tools 7a, 7b in reality attain the same mutual positions at the same time, and Fig. 3 is merely schematic. The tool 7a to the left has taken the position attained at a high rotational speed, whereas the tool 7b to the right displays the position when the cutting disk 6 is rotating at a low speed or is standing still.

On rotation of the cutting disk 6, the tools 7a, 7b, typically cutting knives, will be subject to their inertia and to the centripetal force exerted by the respective pins 10. The outer, free ends of the knives 7a, 7b may hereby proceed as far from the center of the cutting disk 6 as possible, by centrifugal action, while the inner ends of the knives 7a, 7b remain in the position defined by the pin 10 on the cutting disk 6. The result will be that the outer end of the knife 7a will rise to the level of the cutting disk 6 when the cutting disk 6 rotates.

As seen in Fig. 3, the outer end of the tool 7b is arranged at a level below the level of the cutting disk 6, when the cutting disk 6 is at a stand-still. This is due to the action of gravity and the absence of centrifugal action. When the cutting disk 6 starts to rotate, the outer end of the tool 7a will gradually rise to the level of the cutting disk 6. The consequence of the varying height above the ground as the rotational speed of the cutting disk 6 varies is that the robotic work tool 1 may risk making uneven cuts, or cut into the ground, since the cutting height is depending on the speed at each moment.

In connection with the start of a cutting cycle, the cutting disk 6 may accelerate and pass through all the rotational speeds between a complete standstill and the full speed. At the end of a cutting cycle the speed may in a corresponding way be gradually reduced, and the tools 7a, 7b may be gradually lowered. Hence the level of the tool 7a is predictable when the cutting disk 6 rotates at full speed, since the outer ends of the tool 7a may then be at the same level as the cutting disk 6, or at least at a constant level.

Figs. 4a and 4b disclose a tool 7, i. e. a knife, with a slit 12. Since the slit 12 is elongate and the clearance between the knife 7 and the pin 10 is large at least in one direction, the tendency of the knife 7 to droop below the level of the cutting disk 6 is pronounced. In order to prevent an uneven cut in areas where the demand for precision is high, the cutting disk 6 should be positioned at an elevated level and not be lowered until the knives 7 extend at the level of the cutting disk 6, i. e. when the cutting disk 6 rotates at full speed.

The advantages of the disclosed knife 7 is that it may rotate, as shown in Fig. 4, in case of contact with an obstacle 11, such as a branch that is too thick to be cut. Since the knife 7 easily rotates on contact, it is less likely to get stuck on such obstacles. Also, the rotation of the knife 7 may in some cases result in a complete turning of the knife 7, so that the previously leading edge 13 may be the trailing edge 14 and vice versa. A rotation or turning of the knife 7 may also take place when the cutting disk 6 starts rotating in a reverse direction. Since the knives 7 may turn at random points in time, the wear of the edges 13,14 may be uniform.

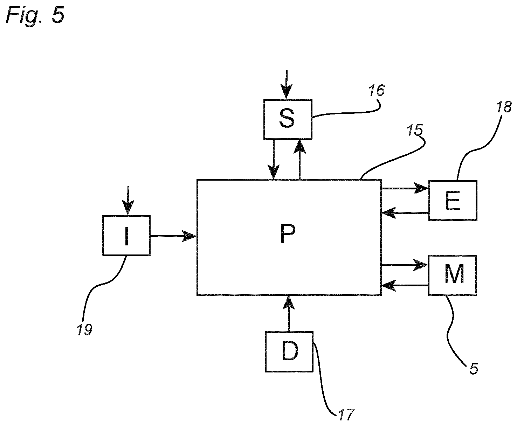

Fig. 5 discloses a general configuration of the robotic work tool 1, in the form of a block diagram. The robotic work tool 1 comprises at least start/stop means S 16, which may be an electric switch etc., and which may be switched on and off by a user. When the robotic work tool 1 has been switched on, it may be possible for the user to input a desired final cutting height via the input means 19. The value of the desired final cutting height may be sent to a processor P 15, which may also receive information from various detection means D 17, e. g. about the present height of the vegetation in the work area, weather conditions etc. The processor P 15 may then calculate a determined first cutting height based at least on the desired final cutting height, and possibly other factors that are considered relevant. In some cases, the result of the calculations may be that the determined first cutting height is equal to the desired final cutting height. In other cases, the processor P 15 may calculate the determined first cutting height as higher than the desired final cutting height, i. e. the robotic work tool 1 may have to process the work area in several steps with a gradually lowered determined cutting height.

Based on the determined cutting height, the processor P 15 is configured to calculate a suitable elevated height of the cutting disk 6, preferably 5-10 mm above the determined cutting height. The distance between the elevated height and the determined cutting height may be equal to or slightly larger than the maximum distance that the tools 7 on the cutting disk 6 may droop below the level of the cutting disk 6.

Instructions of the calculated elevated height may be sent to an elevation means E 18, which is configured to automatically adjust the height of the cutting disk 6, when instructed, by the processor P 15, to do so. The motor M 5 is configured to receive instructions from the processor P 15 to start the rotation of the cutting disk 6, when the elevation means E 18 confirms that the elevated height has been attained. The processor P 15 is further configured to receive information of the rotational speed of the cutting motor M 5 and to instruct the elevation means E 18 to lower the cutting disk 6 as soon as the rotational speed is sufficient, i. e. when the outer ends of the tools 7 on the cutting disk 6 may be safely assumed to have risen to the level of the cutting disk 6.

The processor P 15 may be configured to direct the robotic work tool 1 in the work area during a cutting cycle according to the knowledge in the field, and the detection means D 17 may be configured to collect and forward the necessary information to the processor P 15, until the whole area has been processed to the determined first cutting height. The processor P 15 may also be configured to determine if the desired final cutting height has been attained. If not, the processor P 15 may be configured to calculate another determined cutting height, another elevated height based thereon, and send corresponding instructions to the elevation means E 18 and the cutting motor M 5, as described above.

The processor P 15 may further be configured to instruct the elevation means E 18 to raise the cutting disk 6 to the elevated height previously calculated, when a cutting cycle is finished, or if the robotic work tool 1 needs to be recharged before continuing the cutting cycle. After the elevation means E 18 has raised the cutting disk 6, the cutting motor M 5 may be instructed by the processor P 15 to decelerate and stop the rotation of the cutting disk 6. The processor P 15 is configured to activate the start/stop means S 16, if the processor P 15 has determined that no more cutting cycles are necessary, i. e. that the desired final cutting height has been reached, so that the robotic work tool 1 may be stopped.

## Claims

1. A robotic work tool (1) comprising a cutting disk (6), which is rotatable and height adjustable, the cutting disk (6) comprising tools (7a, 7b), and the robotic work tool (1) being configured to:
- obtain a final desired cutting height of the cutting disk (6);
- determine a first cutting height, based at least on the final desired cutting height;
- raise the cutting disk (6) to an elevated position above the first cutting height;
**characterized in that** the robotic work tool further is configured to:
- start a rotation of the cutting disk (6) when the cutting disk (6) is in its elevated position;
- lower the cutting disk (6) to the determined first cutting height, after it has obtained a rotational cutting speed sufficient to raise the outer ends of the tools (7a, 7b) mounted on the cutting disk (6); and
- raise the cutting disk (6) to its elevated position before lowering its rotational speed.

2. The robotic work tool (1) according to claim 1, wherein the robotic work tool (1) is configured to raise the cutting disk (6) to its elevated position after a cutting session has been completed.

3. The robotic work tool (1) according to claim 1 or 2, wherein the robotic work tool (1) is configured to raise the cutting disk (6) to its elevated position before a cutting session starts.

4. The robotic work tool (1) according to any of the preceding claims, wherein the robotic work tool (1) comprises an elevation means E (18) arranged to automatically raise and lower the cutting disk (6).

5. The robotic work tool (1) according to any of the preceding claims, wherein the robotic work tool (1) is configured to activate an indicator before the cutting disk (6) is lowered.

6. The robotic work tool (1) according to claim 5, wherein the activation of the indicator includes sounding an alarm signal.

7. The robotic work tool (1) according to any of the preceding claims, wherein the elevated position is 5-10 mm above the determined first cutting height.

8. The robotic work tool (1) according to any of the preceding claims, wherein the cutting disk (6) includes rotatable knives (7).

9. The robotic work tool (1) according to any of the preceding claims, wherein the robotic work tool (1) is configured to have a regular mode and a low mode and configured to raise the cutting disk (6) to the elevated position in the low mode only.

10. The robotic work tool (1) according to any of the preceding claims, wherein the robotic work tool (1) is configured to:
- determine one or more further cutting heights below the first cutting height based at least on the final desired cutting height;
- determine the elevated position to 5-10 mm above the further cutting height;
- raising the cutting disk (6) to the elevated position;
- starting the rotation of the cutting disk (6); and
- lowering the cutting disk (6) to the determined further cutting height.

11. A method for running a robotic work tool (1), comprising the steps of:
- obtaining an final desired cutting height;
- determining a first cutting height, based at least on the final desired cutting height;
- raising a cutting disk (6), with tools mounted thereon, to an elevated position above the first cutting height;
**characterized in that** the method further comprises the steps of:
- starting a rotation of the cutting disk (6) when the cutting disk is in its elevated position;
- lowering the cutting disk (6) to the determined first cutting height, after it has obtained a rotational cutting speed sufficient to raise the outer ends of the tools (7a, 7b) mounted on the cutting disk (6); and
- raising the cutting disk (6) to its elevated position before lowering its rotational speed.

## Patentansprüche

1. Roboterarbeitswerkzeug (1), umfassend eine Schneidscheibe (6), die drehbar und höhenverstellbar ist, wobei die Schneidscheibe (6) Werkzeuge (7a, 7b) umfasst, und wobei das Roboterarbeitswerkzeug (1) für Folgendes konfiguriert ist:
- Erhalten einer endgültigen gewünschten Schnitthöhe der Schneidscheibe (6);
- Bestimmen einer ersten Schnitthöhe mindestens basierend auf der gewünschten endgültigen Schnitthöhe;
- Anheben der Schneidscheibe (6) auf eine erhöhte Position oberhalb der ersten Schnitthöhe;
**dadurch gekennzeichnet, dass** das Roboterarbeitswerkzeug ferner für Folgendes konfiguriert ist:
- Starten einer Drehung der Schneidscheibe (6), wenn sich die Schneidscheibe (6) in ihrer angehobenen Position befindet;
- Absenken der Schneidscheibe (6) auf die bestimmte erste Schnitthöhe, nachdem sie eine Schneiddrehzahl erreicht hat, die ausreicht, um die äußeren Enden der an der Schneidscheibe (6) montierten Werkzeuge (7a, 7b) anzuheben; und
- Anheben der Schneidscheibe (6) in ihre angehobene Position, bevor ihre Drehzahl verringert wird.

2. Roboterarbeitswerkzeug (1) nach Anspruch 1, wobei das Roboterarbeitswerkzeug (1) konfiguriert ist, um die Schneidscheibe (6) in ihre angehobene Position anzuheben, nachdem ein Schneidvorgang abgeschlossen wurde.

3. Roboterarbeitswerkzeug (1) nach Anspruch 1 oder 2, wobei das Roboterarbeitswerkzeug (1) konfiguriert ist, um die Schneidscheibe (6) in ihre angehobene Position anzuheben, bevor ein Schneidvorgang beginnt.

4. Roboterarbeitswerkzeug (1) nach einem der vorstehenden Ansprüche, wobei das Roboterarbeitswerkzeug (1) ein Hebemittel E (18) umfasst, das angeordnet ist, um die Schneidscheibe (6) automatisch anzuheben und abzusenken.

5. Roboterarbeitswerkzeug (1) nach einem der vorstehenden Ansprüche, wobei das Roboterarbeitswerkzeug (1) konfiguriert ist, um eine Anzeige zu aktivieren, bevor die Schneidscheibe (6) abgesenkt wird.

6. Roboterarbeitswerkzeug (1) nach Anspruch 5, wobei die Aktivierung der Anzeige das Ausgeben eines Alarmsignals einschließt.

7. Roboterarbeitswerkzeug (1) nach einem der vorstehenden Ansprüche, wobei die angehobene Position 5-10 mm über der bestimmten ersten Schnitthöhe liegt.

8. Roboterarbeitswerkzeug (1) nach einem der vorstehenden Ansprüche, wobei die Schneidscheibe (6) drehbare Messer (7) einschließt.

9. Roboterarbeitswerkzeug (1) nach einem der vorstehenden Ansprüche, wobei das Roboterarbeitswerkzeug (1) konfiguriert ist, um einen regulären Modus und einen niedrigen Modus aufzuweisen, und konfiguriert ist, um die Schneidscheibe (6) nur in dem niedrigen Modus in die angehobene Position anzuheben.

10. Roboterarbeitswerkzeug (1) nach einem der vorstehenden Ansprüche, wobei das Roboterarbeitswerkzeug (1) ferner für Folgendes konfiguriert ist:
- Bestimmen einer oder mehrerer weiterer Schnitthöhen unterhalb der ersten Schnitthöhe basierend auf mindestens der endgültigen gewünschten Schnitthöhe;
- Bestimmen der angehobenen Position auf 5-10 mm über der weiteren Schnitthöhe;
- Anheben der Schneidscheibe (6) in die angehobene Position;
- Starten der Drehung der Schneidscheibe (6); und
- Absenken der Schneidscheibe (6) auf die bestimmte weitere Schnitthöhe.

11. Verfahren zum Betreiben eines Roboterarbeitswerkzeugs (1), umfassend die folgenden Schritte:
- Erhalten einer endgültigen gewünschten Schnitthöhe;
- Bestimmen einer ersten Schnitthöhe basierend auf mindestens der endgültigen gewünschten Schnitthöhe;
- Anheben einer Schneidscheibe (6) mit daran montierten Werkzeugen in eine erhöhte Position über der ersten Schnitthöhe;
**dadurch gekennzeichnet, dass** das Verfahren ferner die folgenden Schritte umfasst:
- Starten einer Drehung der Schneidscheibe (6), wenn sich die Schneidscheibe in ihrer angehobenen Position befindet;
- Absenken der Schneidscheibe (6) auf die bestimmte erste Schnitthöhe, nachdem sie eine Schneiddrehzahl erreicht hat, die ausreicht, um die äußeren Enden der an der Schneidscheibe (6) montierten Werkzeuge (7a, 7b) anzuheben; und
- Anheben der Schneidscheibe (6) in ihre erhöhte Position vor dem Verringern ihrer Drehzahl.

## Revendications

1. Outil de travail robotique (1) comprenant un disque de coupe (6), qui est rotatif et ajustable en hauteur, le disque de coupe (6) comprenant des outils (7a, 7b), et l'outil de travail robotique (1) étant conçu pour :
- obtenir une hauteur de coupe souhaitée finale du disque de coupe (6) ;
- déterminer une première hauteur de coupe, en fonction au moins de la hauteur de coupe souhaitée finale ;
- lever le disque de coupe (6) à une position surélevée au-dessus de la première hauteur de coupe ;
**caractérisé en ce que** l'outil de travail robotique est conçu en outre pour :
- démarrer une rotation du disque de coupe (6) lorsque le disque de coupe (6) est dans sa position surélevée ;
- abaisser le disque de coupe (6) à la première hauteur de coupe déterminée, après qu'il a obtenu une vitesse de coupe en rotation suffisante pour lever les extrémités externes des outils (7a, 7b) montés sur le disque de coupe (6) ; et
- lever le disque de coupe (6) à sa position surélevée avant abaissement de sa vitesse de rotation.

2. Outil de travail robotique (1) selon la revendication 1, dans lequel l'outil de travail robotique (1) est conçu pour lever le disque de coupe (6) à sa position surélevée après qu'une session de coupe a été achevée.

3. Outil de travail robotique (1) selon la revendication 1 ou 2, dans lequel l'outil de travail robotique (1) est conçu pour lever le disque de coupe (6) à sa position surélevée avant qu'une session de coupe ne démarre.

4. Outil de travail robotique (1) selon l'une quelconque des revendications précédentes, dans lequel l'outil de travail robotique (1) comprend un moyen d'élévation E (18) agencé pour lever et abaisser automatiquement le disque de coupe (6).

5. Outil de travail robotique (1) selon l'une quelconque des revendications précédentes, dans lequel l'outil de travail robotique (1) est conçu pour activer un indicateur avant que le disque de coupe (6) ne soit abaissé.

6. Outil de travail robotique (1) selon la revendication 5, dans lequel l'activation de l'indicateur comporte l'émission d'un signal d'alarme.

7. Outil de travail robotique (1) selon l'une quelconque des revendications précédentes, dans lequel la position surélevée est à 5 à 10 mm au-dessus de la première hauteur de coupe déterminée.

8. Outil de travail robotique (1) selon l'une quelconque des revendications précédentes, dans lequel le disque de coupe (6) comporte des lames rotatives (7).

9. Outil de travail robotique (1) selon l'une quelconque des revendications précédentes, dans lequel l'outil de travail robotique (1) est conçu pour avoir un mode normal et un mode bas et conçu pour lever le disque de coupe (6) à la position surélevée dans le mode bas uniquement.

10. Outil de travail robotique (1) selon l'une quelconque des revendications précédentes, dans lequel l'outil de travail robotique (1) est conçu pour :
- déterminer une ou plusieurs hauteurs de coupe supplémentaires en dessous de la première hauteur de coupe en fonction au moins de la hauteur de coupe souhaitée finale ;
- déterminer la position surélevée à 5 à 10 mm au-dessus de la hauteur de coupe supplémentaire ;
- lever le disque de coupe (6) à la position surélevée ;
- démarrer la rotation du disque de coupe (6) ; et
- abaisser le disque de coupe (6) à la hauteur de coupe supplémentaire déterminée.

11. Procédé permettant de faire fonctionner un outil de travail robotique (1), comprenant les étapes consistant à :
- obtenir une hauteur de coupe souhaitée finale ;
- déterminer une première hauteur de coupe, en fonction au moins de la hauteur de coupe souhaitée finale ;
- lever un disque de coupe (6), avec des outils montés sur celui-ci, à une position surélevée au-dessus de la première hauteur de coupe ;
**caractérisé en ce que** le procédé comprend en outre les étapes consistant à :
- démarrer une rotation du disque de coupe (6) lorsque le disque de coupe est dans sa position surélevée ;
- abaisser le disque de coupe (6) à la première hauteur de coupe déterminée, après qu'il a obtenu une vitesse de coupe en rotation suffisante pour lever les extrémités externes des outils (7a, 7b) montés sur le disque de coupe (6) ; et
- lever le disque de coupe (6) à sa position surélevée avant abaissement de sa vitesse de rotation.
